# EUROPÄISCHE PATENTANMELDUNG

(11) **EP 1 067 751 A2**
(43) Veröffentlichungstag der Anmeldung: **10.01.2001**
(21) Anmeldenummer: 00111571.6
(22) Anmeldetag: 30.05.2000
(51) Int. Cl.: H04M 3/22

(54) **Verfahren und Testanordnung zum Testen von Leistungsmerkmalen von Kommunikationsanlagen**

(30) Priorität: 07.07.1999 DE 19931237
(71) Anmelder: SIEMENS AKTIENGESELLSCHAFT, 80333 München (DE)
(72) Erfinder: Assenbrunner, Maximilian, 81379 München (DE)

(57) **Zusammenfassung**

Von einem Anrufsimulator (SIM) wird ein Anruf mit vorgebbarer anrufspezifischer Information (ARN), wie z.B. der Rufnummer eines Anrufers, generiert und über eine Netzschnittstelle (NS) zu einer Kommunikationsanlage (KA) übermittelt. Eine von dieser abhängig von der anrufspezifischen Information (ARN) gebildete und über eine Endgeräteschnittstelle (ES) ausgegebene Anzeigeinformation (AI) wird von einer an die Endgeräteschnittstelle (ES) angekoppelten Schnittstellenüberwachungseinrichtung (ST) extrahiert und einer Datenverarbeitungseinrichtung (PC) übermittelt. Von dieser wird die Anzeigeinformation (AI) mit einem vorgebbaren Informationsmuster (IM) verglichen und abhängig vom Vergleichsergebnis weiterverarbeitet.

## Beschreibung

Die Erfindung betrifft ein Verfahren und eine Testanordnung zum Testen von Leistungsmerkmalen von an ein - vorzugsweise öffentliches - Kommunikationsnetz anschließbaren Kommunikationsanlagen, wie z.B. Vermittlungseinrichtungen oder Nebenstellenanlagen.

Im Zuge einer gegenwärtig stattfindenden Entwicklung werden Kommunikationsanlagen mit zunehmend effektiveren Leistungsmerkmalen ausgestattet. Aufgrund der damit einhergehenden, steigenden Komplexität von Kommunikationsanlagen, wächst auch das Bedürfnis nach zuverlässigen Verfahren zum Testen von Leistungsmerkmalen bei Entwicklung, Installation und Wartung von Kommunikationsanlagen.

Eine wichtige Klasse von Leistungsmerkmalen betrifft eine Übermittlung von verbindungsspezifischer Information zu einem Endteilnehmer einer Verbindung. Ein Beispiel hierfür ist die Übermittlung der Rufnummer eines anrufenden Teilnehmers zum Endgerät eines gerufenen Teilnehmers. Eine solche Übermittlung ist sowohl bei digitaler als auch bei analoger Verbindungsvermittlung möglich. Bei analoger Verbindungsvermittlung ist eine zu übertragende Rufnummer allerdings zunächst in Signale des Sprachfrequenzbandes, d.h. Analogsignale, umzusetzen und in dieser Form zur Kommunikationsanlage zu übertragen. In der Kommunikationsanlage werden die Analogsignale mit der analog kodierten Rufnummer dann wieder in die digital kodierte Rufnummer umgesetzt, die im Rahmen einer Anzeigeinformation zum gerufenen Endgerät übertragen wird. Das Leistungsmerkmal zur automatischen Rufnummernanzeige eines rufenden Teilnehmers in einem analog vermittelten Kommunikationsnetz wird häufig als auch ANI (automatic number identification) bezeichnet.

Ein Test dieses Leistungsmerkmals wird bei einer an ein öffentliches Kommunikationsnetz angeschlossenen Kommunikationsanlage bisher so durchgeführt, daß mehrere Anrufe über die Amtsleitung an ein an die Kommunikationsanlage angeschlossenes Endgerät gerichtet werden und am Display des Endgerätes beobachtet wird, ob die Rufnummer des Anrufers korrekt übermittelt wurde.

Ein derartiges Testverfahren erfordert naturgemäß einen hohen Zeitaufwand, so daß in der Regel nur relativ wenige Testdurchläufe durchführbar sind. Dadurch lassen sich oft nicht alle Betriebssituationen überprüfen und statistische Aussagen über die Signifikanz von Testergebnissen sind nur schwer zu treffen.

Es ist Aufgabe der vorliegenden Erfindung ein Verfahren und eine Testanordnung zum Testen eines Leistungsmerkmals einer Kommunikationsanlage anzugeben, das weitgehend automatisiert abläuft.

Gelöst wird diese Aufgabe durch ein Testverfahren mit den Merkmalen des Patentanspruchs 1 und eine Testanordnung mit den Merkmalen des Patentanspruchs 7.

Aufgrund der Verwendung eines Anrufsimulators und einer Schnittstellenüberwachungseinrichtung ist kein Eingriff in die Kommunikationsanlage erforderlich, sondern nur ein Zugriff auf die Netzschnittstelle durch den Anrufsimulator und auf eine Endgeräteschnittstelle durch die Schnittstellenüberwachungseinrichtung. Der Anrufsimulator kann dazu beispielsweise direkt an die Netzschnittstelle gekoppelt sein oder auch über ein Kommunikationsnetz, an das die Kommunikationsanlage ggf. angeschlossen ist. Zur Durchführung des Tests ist es nicht zwingend erforderlich, eine gegebenenfalls bestehende Ankopplung der Kommunikationsanlage an ein Kommunikationsnetz oder eine Ankopplung eines Endgerätes an die Kommunikationsanlage zu unterbrechen. Damit kann das erfindungsgemäße Testverfahren insbesondere auch während des laufenden Betriebs der Kommunikationsanlage durchgeführt werden. Als anrufspezifische Information können vom Anrufsimulator auch anruferspezifische Information und/oder eine Steuerinformation zur anrufindividuellen Steuerung eines Leistungsmerkmals mit einem simulierten Anruf übermittelt werden

Ein wesentlicher Vorteil der Erfindung besteht im automatisierten Testablauf. Damit können auch eine Vielzahl von Testdurchläufen in akzeptabler Zeit ausgeführt werden. Eine Durchführung einer Vielzahl von Testdurchläufen unter verschiedenen Betriebssituationen ermöglicht eine statistisch signifikante Aussage über eine zu erwartende Fehlerrate. Da zur Durchführung eines Testdurchlaufs keine Überwachung erforderlich ist, können längere Testreihen vorzugsweise zu Zeiten niederer Systemauslastung, wie z.B. nachts erfolgen. Aufgrund der programmgesteuerten Generierung von Anrufen im Anrufsimulator ist ein durchgeführter Test jederzeit reproduzierbar.

Vorteilhafte Ausführungsformen und Weiterbildungen der Erfindung sind in den Unteransprüchen angegeben.

Nach einer vorteilhaften Weiterbildung der Erfindung wird ein Informationsmuster mit dem die Anzeigeinformation von der Datenverarbeitungseinrichtung verglichen wird, in Abhängigkeit von der im Anrufsimulator generierten anrufspezifischen Information vorgegeben. Die Datenverarbeitungseinrichtung kann zu diesem Zweck mit dem Anrufsimulator gekoppelt werden. Durch eine Generierung von Anrufen mit unterschiedlicher anrufspezifischer Information können ein oder mehrere Leistungsmerkmale mit unterschiedlichen Aufrufparametern aktiviert werden. In der Regel werden dabei die jeweils gebildeten Anzeigeinformationen ebenfalls variieren. Die Verarbeitung dieser Anzeigeinformationen kann in einem solchen Fall durch die Vorgabe eines auf die jeweils generierte anrufspezifische Information abgestimmten Informationsmusters gezielt gesteuert werden.

Nach einer weiteren vorteilhaften Weiterbildung der Erfindung können der Anrufsimulator und die Schnittstellenüberwachungseinrichtung gekoppelt werden. Dies erlaubt es unter anderem, die Anzeigeinformation durch die Schnittstellenüberwachungseinrichtung abhängig von der im Anrufsimulator generierten anrufspezifischen Information zu extrahieren.

Weiterhin kann zum Testen eines Leistungsmerkmals im Zusammenhang mit einer analogtechnischen Übermittlung von anrufspezifischer Information, diese vom Anrufsimulator mittels einer Modulatoreinrichtung in Signale des Sprachfrequenzbandes umgesetzt und in dieser Form zur Kommunikationsanlage übertragen werden. Die Umsetzung erfolgt dabei gemäß einem von der Kommunikationsanlage im Rahmen des zu testenden Leistungsmerkmals verwendeten Protokolls.

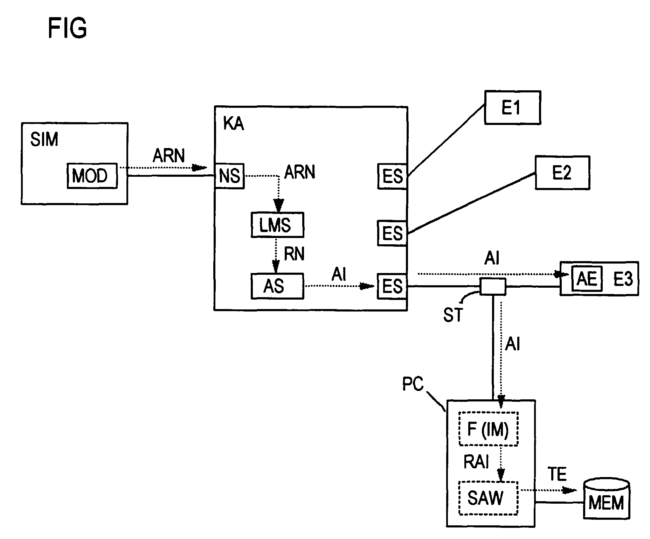

Ein Ausführungsbeispiel der Erfindung wird nachfolgend anhand der Zeichnung näher erläutert.

Die FIG zeigt eine Testanordnung für eine Kommunikationsanlage in schematischer Darstellung In der FIG ist eine Testanordnung zum Testen eines Leistungs

merkmals einer Kommunikationsanlage KA, z.B. einer Vermittlungseinrichtung, schematisch dargestellt. Die Testanordnung besteht aus einem Anrufsimulator SIM, einer Schnittstellenüberwachungseinrichtung ST, z.B. einem sogenannten Schnittstellentracer, und einem Personal Computer PC. Die Kommunikationsanlage KA verfügt über eine Netzschnittstelle NS zum Anschließen an ein öffentliches Kommunikationsnetz (nicht dargestellt) sowie über drei Endgeräteschnittstellen ES, an die die Endgeräte E1, E2 und E3 angeschlossen sind. Als weitere Funktionskomponenten enthält die Kommunikationsanlage KA eine Leistungsmerkmalsteuerung LMS sowie eine Anzeigesteuerung AS.

Der Anrufsimulator SIM, der häufig auch als Amtssimulator bezeichnet wird, weist eine Modulatoreinrichtung MOD auf und ist im vorliegenden Ausführungsbeispiel direkt mit der Netzschnittstelle NS der Kommunikationsanlage KA verbunden. Alternativ dazu könnte der Anrufsimulator SIM auch über das öffentliche Kommunikationsnetz an die Kommunikationsanlage KA gekoppelt werden. Der Anrufsimulator SIM ist über eine Scriptsprache programmierbar.

Auf dem Personal Computer PC sind ein auf der Grundlage von Mustervergleichen mit einem vorgegebenen Informationsmuster IM basierendes Filterprogramm F sowie ein Programm zur statistischen Datenauswertung SAW implementiert. Der Personal Computer PC verfügt weiterhin über eine Speichereinrichtung MEM, z.B. eine Festplatte. Der Personal Computer PC ist an die Schnittstellenüberwachungseinrichtung ST angeschlossen, die wiederum an die Verbindungsleitung zwischen Kommunikationsanlage KA und dem Endgerät E3 angekoppelt ist.

Im vorliegenden Ausführungsbeispiel dient die Testanordnung zum Testen des sog. ANI-Leistungsmerkmals (automatic number identification), das es erlaubt, eine Rufnummer RN eines anrufenden Teilnehmers auch bei analoger Anrufübertragung zum Endgerät eines gerufenen Teilnehmers zu übertragen. Eine zu übertragende Rufnummer wird zu diesem Zweck durch eine Modulatoreinrichtung in Signale des Sprachfrequenzbandes mittels sog. FSK-Modulation (frequency shift keying) umgesetzt und in dieser Form zur Kommunikationsanlage KA übertragen, wo die analog kodierte Rufnummer vor ihrer Weiterleitung an das gerufene Endgerät wieder in eine digital kodierte Rufnummer umgesetzt wird.

Zum Testen des ANI-Leistungsmerkmals wird vom Anrufsimulator SIM programmgesteuert ein an das Endgerät E3 gerichteter Anruf generiert. Im Rahmen dieser Anrufgenerierung wird eine Rufnummer erzeugt, die als anrufspezifische Information gemäß einem zur Übermittlung einer Rufnummer eines anrufenden Teilnehmers verwendeten Übermittlungsprotokoll zur Kommunikationsanlage KA übermittelt wird. Zu diesem Zweck wird die zu übermittelnde Rufnummer in der Modulatoreinrichtung MOD protokollgemäß in Signale des Sprachfrequenzbandes umgesetzt und als analog kodierte Rufnummer ARN zur Kommunikationsanlage KA übertragen. Die analog kodierte Rufnummer ARN wird der Leistungsmerkmalsteuerung LNS zugeführt, um dort in eine digital kodierte Rufnummer RN umgesetzt zu werden. Durch die Übermittlung der anrufspezifischen Information ARN an die Leistungsmerkmalsteuerung LMS wird das ANI-Leistungsmerkmal aktiviert, in dessen Rahmen die digital kodierte Rufnummer RN zur Anzeigesteuerung AS übertragen wird, wo eine zur Anzeige am gerufenen Endgerät E3 bestimmte Anzeigeinformation AI gebildet wird. Die Anzeigeinformation AI enthält dabei einen an einer Anzeigeeinrichtung AE des gerufenen Endgerätes E3 anzuzeigenden Text, sowie ggf. Steuerparameter zur Steuerung der Anzeigeeinrichtung AE. Außer der die Rufnummer RN enthaltenden Anzeigeinformation AI werden von der Anzeigesteuerung AS noch eine Vielzahl weiterer Anzeigeinformationen AI zur Anzeige an den Endgeräten E1, E2 und E3 gebildet. Im vorliegenden Ausführungsbeispiel wird die die Rufnummer RN enthaltende Anzeigeinformation AI zusammen mit einer Vielzahl von weiteren Anzeigeinformationen AI von der Anzeigesteuerung AS über eine Endgeräteschnittstelle ES zum Endgerät E3 übermittelt.

Alle zum Endgerät E3 übermittelten Anzeigeinformationen AI werden von dem an die Verbindungsleitung zwischen Kommunikationsanlage KA und Endgerät E3 angekoppelten Schnittstellenüberwachungseinrichtung ST - ggf. aus weiteren zum Endgerät E3 übermittelten Nutz- und/oder Signalisierungsinformationen - extrahiert und zum Personal Computer PC übertragen. Einen stark gekürzten Auszug aus in einem typischen Anwendungsfall extrahierten Anzeigeinformationen AI zeigt folgende Tabelle:

| |
|---|
| ... |
| TimeOfDay&p]]E][ |
| LapSMsg[ |
| TimeOfDay9qH][ |
| TimeStamp[ |
| TimeOfDay&p]]C |
| Call from: 9888888888][ |
| LapSMsg[ |
| TimeOfDay9qz][ |
| TimeStampO[ |
| TimeOfDay&p]]C SAT JAN 1.00][ |
| LapSMsg[ |
| TimeStampw[ |
| TimeOfDay&p]]C |
| Call from: Trunk][ |
| LapSMsg[ |
| TimeOfDayUq][ |
| TimeStamp∼[ |
| ... |

Neben einer Vielzahl von eine Zeitanzeige betreffenden Anzeigeinformationen, sind insbesondere zwei eine Rufnummernübermittlung betreffende Anzeigeinformationen 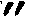 Call from: 9888888888][" und 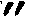 Call from: Trunk][" enthalten. (Die in obiger Tabelle auftretenden, nicht-alphanumerischen Zeichen sind ASCII-Repräsentationen von übermittelten Steuerzeichen.)

Die extrahierten Anzeigeinformationen AI werden dem Filterprogramm F zugeführt, das jede Anzeigeinformation mit einem vorgegebenen Informationsmuster IM vergleicht und nur diejenigen Anzeigeinformationen ausgibt, die dem Informationsmuster IM entsprechen. Im vorliegenden Fall besteht das Informationsmuster IM aus der Zeichenkette "Call from:", so daß alle diese Zeichenkette enthaltenden und damit alle eine Rufnummernübertragung betreffenden Informationselemente RAI der Anzeigeinformation AI ausgegeben werden. Nachfolgende Tabelle zeigt einen typischen Auszug aus vom Filterprogramm F ausgegebenen rufnummernbezogenen Anzeigeinformationen RAI:

| |
|---|
| ... |
| 19212 Call from: 9888888888 |
| 19213 Call from: 9555555555 |
| 19214 Call from: Trunk |
| 19215 Call from: Trunk |
| 19216 Call from: 9888888888 |
| 19217 Call from: 9555555555 |
| 19218 Call from: 9888888888 |
| 19219 Call from: 9555555555 |
| 19220 Call from: 9888888888 |
| 19221 Call from: 9555555555 |
| 19222 Call from: 9888888888 |
| 19223 Call from: Trunk |
| 19224 Call from: 9888888888 |
| ... |

Diese Tabelle entstammt einem Test in dessen Rahmen 20000 Testanrufe vom Anrufsimulator SIM generiert wurden, wobei jeweils abwechselnd die Nummer 9888888888 und die Nummer 9555555555 als Rufnummer des anrufenden Teilnehmers übermittelt wurde. Die erste Spalte dieser Tabelle enthält eine fortlaufende Numerierung dieser Testanrufe. Die anderen Spalten zeigen jeweils die an der Anzeigeeinrichtung AE anzuzeigende Information. Die Zeilen, in denen als Rufnummer "Trunk" angegeben ist, entsprechen den Fällen, in denen die Rufnummer des anrufenden Teilnehmers von der Leistungsmerkmalsteuerung LMS nicht erkannt wurde. Alternativ zu einer Erzeugung zweier sich abwechselnder Rufnummern kann der Anrufsimulator SIM auch so programmiert werden, daß eine Vielzahl unterschiedlicher Rufnummern, z.B. in auf- oder absteigender Reihenfolge, generiert und als anrufspezifische Informationen übertragen werden.

Die vom Filterprogramm F ausgegebenen rufnummernbezogenen Anzeigeinformationen RAI dienen als Eingabe für das Programm zur statistischen Datenauswertung SAW. Von diesem werden im vorliegenden Ausführungsbeispiel diejenigen rufnummernbezogenen Anzeigeinformationen RAI mit korrekt erkannter Rufnummer sowie diejenigen mit nicht erkannter Rufnummer gezählt. Zur Entscheidung, ob eine in der rufnummernbezogenen Anzeigeinformation angegebene Rufnummer korrekt ist, kann ggf. eine Anfrage an den Anrufsimulator SIM über eine zu diesem Zweck vorgesehene Verbindung (nicht dargestellt) zwischen Anrufsimulator SIM und Personal Computer PC erfolgen. Die jeweilige Anzahl der Anrufe mit erkannter Rufnummer und die Anzahl der Anrufe ohne erkannte Rufnummer werden schließlich mit anderen Auswertungsdaten vom Auswerteprogramm SAW als Testergebnisdaten TE auf der Speichereinrichtung MEM für einen späteren Abruf gespeichert. Als typisches Beispiel für Testergebnisdaten TE sei die Ergebnisdatei der oben erwähnten Testreihe mit 20000 simulierten Anrufen angegeben:

| | |
|---|---|
| Anrufe mit erkannter Rufnummer: | 19276 |
| Anrufe ohne Rufnummer: | 724 |
| Anrufe Gesamt: | 20000 |
| Anteil erkannter Rufnummern: | 96.4% |

Zur Gewinnung dieser Tabelle wurden von der Schnittstellenüberwachungseinrichtung ST Anzeigeinformationen AI im Umfang von 48 MByte extrahiert, aus denen vom Filterprogramm F rufnummernbezogene Anzeigeinformationen RAI im Umfang von 566 KByte ausgesondert wurden. Die enorme Menge der zu verarbeitenden Daten macht deutlich, daß derartig umfangreiche Testreihen mit bisherigen Verfahren zum Testen des ANI-Leistungsmerkmals, d.h. durch Ablesen der jeweils an der Anzeigeeinrichtung AE angezeigten Anzeigeinformation, kaum durchzuführen sind.

## Patentansprüche

1. Verfahren zum Testen eines Leistungsmerkmals einer über eine Netzschnittstelle (NS) an ein Kommunikationsnetz und über eine Endgeräteschnittstelle (ES) mit einem Endgerät (E3) koppelbaren Kommunikationsanlage (KA), bei dem
a) von einem Anrufsimulator (SIM) ein an ein Endgerät (E3) gerichteter, programmgesteuert generierter Anruf mit vorgebbarer anrufspezifischer Information (ARN) über die Netzschnittstelle (NS) zur Kommunikationsanlage (KA) übermittelt wird,
b) in der Kommunikationsanlage (KA) abhängig von der übermittelten anrufspezifischen Information (ARN) ein Leistungsmerkmal aktiviert wird, in dessen Rahmen eine eigentlich zur Anzeige am gerufenen Endgerät (E3) bestimmte Anzeigeinformation (AI) gebildet und über die zur Ankopplung des gerufenen Endgerätes (E3) vorgesehene Endgeräteschnittstelle (ES) ausgegeben wird,
c) die ausgegebene Anzeigeinformation (AI) von einer an die Endgeräteschnittstelle (ES) angekoppelten Schnittstellenüberwachungseinrichtung (ST) aus eigentlich für das gerufene Endgerät bestimmten Nutz- und/oder Signalisierungsinformationen extrahiert und zu einer Datenverarbeitungseinrichtung (PC) übertragen wird und
d) die übertragene Anzeigeinformation (AI) von der Datenverarbeitungseinrichtung (PC) mit einem vorgebbaren Informationsmuster (IM) verglichen wird und abhängig vom Vergleichsergebnis für eine Ausgabe eines (TE) Testergebnisses verarbeitet wird.

2. Verfahren nach Anspruch 1,
**dadurch gekennzeichnet,**
daß das Informationsmuster (IM) in Abhängigkeit von der im Anrufsimulator (SIM) generierten, anrufspezifischen Information (ARN) vorgegeben wird.

3. Verfahren nach Anspruch 1 oder 2,
**dadurch gekennzeichnet,**
daß die anrufspezifische Information (ARN) vom Anrufsimulator (SIM) in Form von Signalen des Sprachfrequenzbandes zur Kommunikationsanlage (KA) übertragen wird.

4. Verfahren nach einem der vorhergehenden Ansprüche,
**dadurch gekennzeichnet,**
daß die Anzeigeinformation (AI) von der Kommunikationsanlage (KA) in digitaler Form ausgegeben wird.

5. Verfahren nach einem der vorhergehenden Ansprüche,
**dadurch gekennzeichnet,**
daß vom Anrufsimulator (SIM) eine Rufnummer gemäß einem zur Übermittlung einer Rufnummer eines anrufenden Teilnehmers vorgesehenen Übermittlungsprotokoll als anrufspezifische Information zur Kommunikationsanlage (KA) übermittelt wird, in der die übermittelte Rufnummer gemäß dem aktivierten Leistungsmerkmal in die Anzeigeinformation (AI) eingefügt wird.

6. Verfahren nach einem der vorhergehenden Ansprüche,
**dadurch gekennzeichnet,**
daß vom Anrufsimulator (SIM) mehrere an ein Endgerät (E3) gerichtete Anrufe mit unterschiedlichen anrufspezifischen Informationen zur Kommunikationsanlage (KA) übermittelt werden, wodurch jeweils dasselbe Leistungsmerkmal mit unterschiedlichen Aufrufparametern aktiviert wird, und daß die erhaltenen Testergebnisse protokolliert werden.

7. Testanordnung zum Testen eines Leistungsmerkmals einer über eine Netzschnittstelle (NS) an ein Kommunikationsnetz und über eine Endgeräteschnittstelle (ES) mit einem Endgerät (E3) koppelbaren Kommunikationsanlage (KA), mit
a) einem über die Netzschnittstelle (NS) an die Kommunikationsanlage (KA) angekoppelten Anrufsimulator (SIM) zum programmgesteuerten Generieren eines an ein Endgerät (E3) gerichteten Anrufes mit vorgebbarer anrufspezifischer Information (ARN) und zum Übermitteln des Anrufs zur Kommunikationsanlage (KA), die
- eine Leistungsmerkmalsteuerung (LMS) zum Aktivieren eines Leistungsmerkmals abhängig von der übermittelten anrufspezifischen Information (ARN) und
- eine Anzeigesteuerung (AS) zum Bilden einer im Rahmen des aktivierten Leistungsmerkmals eigentlich am gerufenen Endgerät (E3) anzuzeigenden Anzeigeinformation (AI) aufweist,
b) einer an die zur Ankopplung des gerufenen Endgerätes (E3) vorgesehene Endgeräteschnittstelle (ES) angekoppelten Schnittstellenüberwachungseinrichtung (ST) zum Extrahieren der von der Kommunikationsanlage (KA) ausgegebenen Anzeigeinformation (AI) aus eigentlich für das gerufene Endgerät (E3) bestimmten Nutz- und/oder Signalisierungsinformationen und
c) einer an die Schnittstellenüberwachungseinrichtung (ST) angekoppelten Datenverarbeitungseinrichtung (PC) mit einem Filterprogramm (F) zum Vergleichen der von der Schnittstellenüberwachungseinrichtung (ST) extrahierten Anzeigeinformation (AI) mit einem vorgebbaren Informationsmuster (IM) und zum Verarbeiten der Anzeigeinformation (AI) abhängig vom Vergleichsergebnis.

8. Testanordnung nach Anspruch 7,
**dadurch gekennzeichnet,**
daß der Anrufsimulator (SIM) eine Modulatoreinrichtung (MOD) zum Umsetzen von anrufspezifischer Information in Signale des Sprachfrequenzbandes aufweist.

9. Testanordnung nach Anspruch 7 oder 8,
**dadurch gekennzeichnet,**
daß die Datenverarbeitungseinrichtung (PC) mit dem Anrufsimulator (SIM) gekoppelt ist.

10. Testanordnung nach einem der Ansprüche 7 bis 9,
**dadurch gekennzeichnet,**
daß die Schnittstellenüberwachungseinrichtung (ST) mit dem Anrufsimulator (SIM) gekoppelt ist.

11. Testanordnung nach einem der Ansprüche 7 bis 10,
**dadurch gekennzeichnet,**
daß die Endgeräteschnittstelle, an die Schnittstellenüberwachungseinrichtung (ST) angekoppelt ist, als Luftschnittstelle realisiert ist.
